# EUROPEAN PATENT SPECIFICATION

(11) **EP 4 647 683 B1**
(45) Date of publication and mention of the grant of the patent: **11.11.2026**
(21) Application number: 25174772.1
(22) Date of filing: 07.05.2025
(51) Int. Cl.: F25B 27/00, F25B 49/00, F25D 29/00, F25B 49/02

(54) **OPERATION CONTROL METHOD OF REFRIGERATOR AND REFRIGERATOR**
BETRIEBSSTEUERUNGSVERFAHREN FÜR EINEN KÜHLSCHRANK UND KÜHLSCHRANK
PROCÉDÉ DE COMMANDE DE FONCTIONNEMENT DE RÉFRIGÉRATEUR ET RÉFRIGÉRATEUR

(30) Priority: 09.05.2024 CN 202410574460
(43) Date of publication of application: 12.11.2025
(73) Proprietor: Anker Innovations Technology Co., Ltd., Changsha, Hunan 410000 (CN)
(72) Inventor: HAN, Cong, Shenzhen (CN)
(74) Representative: Steffens, Adrian

(56) References cited:
- JP-B2- 3 722 041
- US-A1- 2011 048 825
- US-A1- 2017 259 956
- US-A1- 2018 038 633

## Description

### Field

The present disclosure relates to the technical field of refrigeration, in particular to an operation control method of a refrigerator and a refrigerator.

### Background

An outdoor/car refrigerator is a refrigerator which can be powered by a car power supply or a battery, and is used in cars or other outdoor scenes. Because of its advantages of portability and strong adaptability, the refrigerator is deeply loved by users.

However, in the related art, due to factors such as sun exposure and trunk placement, it is easy to make the battery operating temperature of the outdoor/car refrigerator too high, which seriously affects use safety of the battery.

In document US 2017 / 259 956 A1, a stackable case with a cooling and/or heating device, such as a Peltier element, is disclosed. The stackable case can be used as a cooler and/or warmer for storing beverages, food, etc. A power source device, in which a plurality of battery packs is housed, supplies power to the Peltier element and one or more fans. The power supply device has latches for detachably joining or linking it to the stackable case in a stacked manner.

### Summary

Based on this, it is necessary to provide an operation control method of a refrigerator and a refrigerator, so as to lower an operating temperature of a battery as much as possible and improve use safety of the battery.

An operation control method of a refrigerator and a refrigerator are provided according to the independent claims. The dependent claims refer to further embodiments.

In a first aspect, the disclosure provides an operation control method of a refrigerator, comprising: acquiring battery temperature (of a battery) of the refrigerator in real time in a case where the refrigerator is in a battery-powered refrigeration mode; in a case where the battery temperature is greater than a first preset temperature and lower than a second preset temperature, controlling a compressor of the refrigerator to operate at a lower tap position, wherein the first preset temperature and the second preset temperature are both lower than a preset protection temperature; and in a case where the battery temperature is lower than or equal to the first preset temperature, controlling the compressor to operate at a current tap position.

In a second aspect, the disclosure provides a refrigerator comprising a compressor, an evaporator, a capillary, a condenser, a fan, a battery and a controller, wherein the compressor is connected with the evaporator and the condenser, the condenser is connected with the capillary, and the capillary is connected with the evaporator; the fan is provided on the condenser; the compressor, the evaporator, the condenser, the fan and the controller are separately connected with the battery, and the compressor, the evaporator, the condenser and the fan are separately connected with the controller; and the controller is configured to perform the above steps of the operation control method of the refrigerator.

According to the operation control method of the refrigerator and the refrigerator, in the case where the refrigerator is in the battery-powered refrigeration mode, the battery temperature of the refrigerator battery can be acquired in real time and is compared with the first preset temperature and the second preset temperature which are lower than the preset protection temperature. When the battery temperature is between the first preset temperature and the second preset temperature, the compressor of the refrigerator is controlled to operate at a lower tap position, and when the battery temperature is lower than or equal to the first preset temperature, the tap position of the compressor is kept unchanged. Through this solution, when the battery temperature is too high, that is, the battery temperature is between the first preset temperature and the second preset temperature, the operation tap position of the compressor can be lowered, so as to reduce the discharge amount of the battery, and further reduce the heat amount of the battery. In this way, in the process of starting the refrigerator, the operating temperature of the battery is lowered as much as possible to improve the use safety of the battery.

In the case where the battery temperature is greater than the first preset temperature and lower than the second preset temperature, the method may further comprise: controlling a fan of the refrigerator to operate at a higher tap position. Preferably, the battery and the fan of the refrigerator may be provided inside a same bin.

In the case where the battery temperature is greater than the first preset temperature and lower than the second preset temperature, said controlling a compressor of the refrigerator to operate at a lower tap position may comprise at least one of or each of: in a case where the battery temperature is higher than the first preset temperature and lower than the second preset temperature, determining a number of tap positions that the compressor of the refrigerator needs to reduce at present; and controlling the compressor to reduce the corresponding number of tap positions to operate.

In the case where the battery temperature is greater than the first preset temperature and lower than the second preset temperature, said determining the number of tap positions that the compressor of the refrigerator needs to reduce at present may comprise at least one of or each of:
- in a case where the battery temperature is higher than the first preset temperature and lower than a third preset temperature, determining that the number of tap positions that the compressor of the refrigerator needs to reduce at present is a first number of tap positions; and
- in a case where the battery temperature is higher than or equal to the third preset temperature and lower than the second preset temperature, determining that the number of tap positions that the compressor of the refrigerator needs to reduce at present is a second number of tap positions.

Preferably, the second number of tap positions may be greater than the first number of tap positions.

The operation control method may further comprise at least one of or each of:
- in a case where the refrigerator operates in the battery-powered refrigeration mode and meets shutdown conditions, verifying whether the battery temperature is lower than a fourth preset temperature;
- in a case where the battery temperature is lower than the fourth preset temperature, controlling the fan and the compressor to shut down; and
- in a case where the battery temperature is higher than or equal to the fourth preset temperature and lower than the preset protection temperature, controlling the com-pressor to stop operation and controlling the fan to continue operation.

In a case where the battery temperature is higher than or equal to the fourth preset temperature and lower than the preset protection temperature, said controlling the compressor to stop operation and controlling the fan to continue operation may comprise at least one of or each of:
- in a case where the battery temperature is higher than or equal to the fourth preset temperature and lower than a fifth preset temperature, controlling the compressor to stop operation and controlling the fan to keep operating for a first preset time period or until the battery temperature is lower than the fourth preset temperature; and
- in a case where the battery temperature is higher than or equal to the fifth preset temperature and lower than the preset protection temperature, controlling the compressor to stop operation and controlling the fan to continue operation.

The operation control method may further comprise at least one of or each of:
- in a case where the refrigerator has battery-powered operation requirements, verifying whether the battery temperature is lower than the preset protection temperature;
- in a case where the battery temperature is lower than the preset protection temperature, controlling the refrigerator to start operation; and
- in a case where the battery temperature is higher than or equal to the preset protection temperature, controlling the refrigerator to stop operation.

After controlling the refrigerator to stop operation in a case where the battery temperature is higher than or equal to the preset protection temperature, the method may further comprise at least one of or each of:
- acquiring the battery temperature in real time and timing; and
- controlling the refrigerator to start operation in a case where the battery temperature acquired before the timing reaches the second preset time period is lower than a sixth preset temperature, or the battery temperature acquired after the timing reaches the second preset time period is lower than the preset protection temperature.

Preferably, the sixth preset temperature may be lower than the preset protection temperature.

The refrigerator may be provided with a compressor bin and, preferably the battery, the compressor, the condenser, and the fan may be provided inside the compressor bin.

The fan and the condenser may be arranged in parallel. The fan may be located between the condenser and the compressor. The condenser may be provided at an air inlet of the fan and/or the compressor may be provided at an air outlet of the fan.

### Brief Description of Drawings

In order to more clearly illustrate embodiments of the disclosure or technical solutions in the related art, drawings that need to be used in description of the embodiments or the related art are briefly introduced below. It will be apparent to those of ordinary skill in the art that the drawings in the following description only show some embodiments of the disclosure, and other drawings can be obtained from these drawings without inventive work.
- FIG. 1: is a schematic flowchart of an operation control method of a refrigerator in an embodiment of the present disclosure;
- FIG. 2: is a schematic flowchart of an operation control method of a refrigerator in another embodiment of the present disclosure;
- FIG. 3: is a schematic flowchart of an operation control method of a refrigerator in yet another embodiment of the present disclosure;
- FIG. 4: is a schematic flowchart of an operation control method of a refrigerator in still another embodiment of the present disclosure;
- FIG. 5: is a schematic flowchart of an operation control method of a refrigerator in even another embodiment of the present disclosure;
- FIG. 6: is a schematic diagram of a refrigerator structure in an embodiment of the present disclosure;
- FIG. 7: is a schematic front view of a refrigerator structure in an embodiment of the present disclosure;
- FIG. 8: is a schematic front view of a refrigerator structure in another embodiment of the present disclosure;
- FIG. 9: is a schematic plan view of a refrigerator structure in an embodiment of the present disclosure; and
- FIG. 10: is a schematic plan view of a refrigerator structure in another embodiment of the present disclosure.

### Detailed Description

In order to facilitate understanding of the present disclosure, the present disclosure will be described comprehensively below with reference to the accompanying drawings. Preferred embodiments of the present disclosure are shown in the accompanying drawings. However, the present disclosure may be implemented in many different forms and is not limited to the embodiments described herein. Rather, these embodiments are provided to understand contents of the disclosure thoroughly and comprehensively.

An operation control method of a refrigerator provided by an embodiment of the disclosure is applied to a refrigerator that can perform refrigeration by battery-powered operation, specifically, a car refrigerator or other types of outdoor refrigerators, which is not limited. When this type of refrigerator operates in battery-powered refrigeration mode, that is, refrigeration is performed by battery power supply, battery discharging generates a lot of heat, which eventually makes the battery temperature rise continuously. A battery discharge amount is positively correlated with a battery temperature. The greater the battery discharge amount, the higher the battery temperature. It is found through research that the battery discharge amount is directly correlated with an electrical load, and the greater the power of the electrical load, the greater the battery discharge amount. Therefore, in the solution of the embodiment of the disclosure, when the refrigerator performs refrigeration by battery power supply, the battery temperature is monitored in real time, and when the battery temperature is high, a tap position of a compressor is lowered to reduce the battery discharge amount, thereby slowing down the rise of the battery temperature to a certain extent, avoiding high working temperature of the battery, and improving the use safety of the battery.

Further, through in-depth research, it is found that a battery of a refrigerator is generally provided in a bin together with the compressor at present, and the battery temperature will also be affected by a compressor temperature, that is, a bin temperature will rise with the rise of the compressor temperature, and thus the battery temperature will rise. According to the solution of the embodiment of the disclosure, while lowering the tap position of the compressor to operate, a heat amount of the compressor can also be effectively reduced, thereby reducing the bin temperature, and finally alleviating the phenomenon of battery heating to a certain extent.

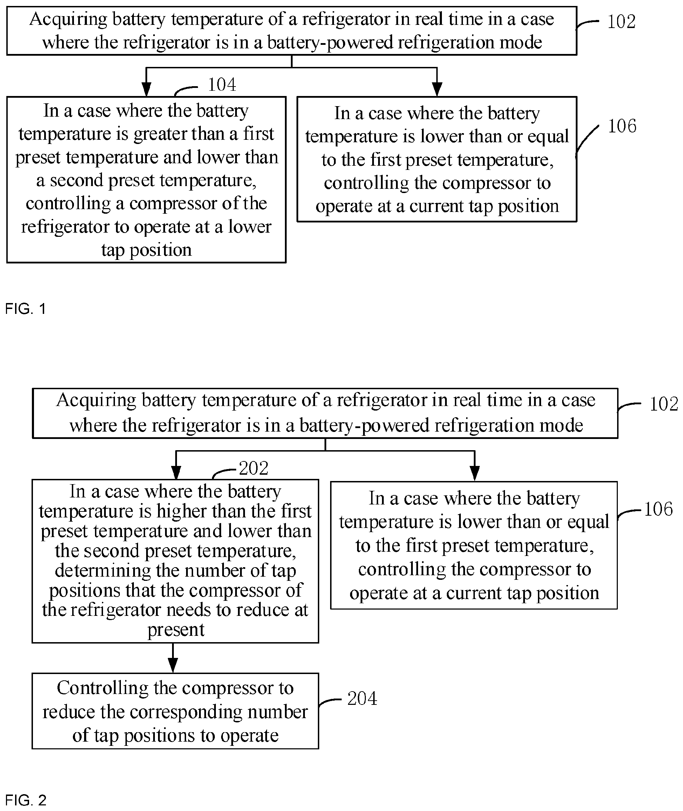

Referring to FIG. 1, the disclosure provides an operation control method of a refrigerator, which includes steps 102, 104 and 106.

In step 102, in a case where the refrigerator is in a battery-powered refrigeration mode, battery temperature of the refrigerator is acquired in real time.

Specifically, the battery-powered refrigeration mode is a mode in which the refrigerator uses a battery as an energy source, supplies power to refrigeration related devices through the battery, and starts refrigeration operation. The battery temperature is real-time temperature of the battery in the refrigerator. When the refrigerator operates in the battery-powered refrigeration mode, a controller of the refrigerator monitors the battery temperature in real time, so as to determine the battery temperature.

It should be noted that the way to acquire the battery temperature is not unique. In one embodiment, the controller communicates with temperature detectors provided in a cell, and analyze (for example, average calculation) cell temperatures collected by the temperature detectors to acquire the battery temperature. In another embodiment, the controller communicates with a battery management system (BMS) of the battery, and the controller directly acquires the battery temperature from the BMS, which is not specifically limited.

In step 104, in a case where the battery temperature is greater than a first preset temperature and lower than a second preset temperature, a compressor of the refrigerator is controlled to operate at a lower tap position.

The first preset temperature and the second preset temperature are both lower than a preset protection temperature. The preset protection temperature is a preset minimum battery temperature during battery shutdown protection. While the battery is operating, battery performance will be attenuated when the battery temperature is too high or too low, and the battery will easily catch fire when the battery temperature is higher than a certain value. Therefore, in the solution of the embodiment of the disclosure, the preset protection temperature, the first preset temperature and the second preset temperature are pre-stored in the controller, and in a case where the battery temperature is greater than the preset protection temperature, the battery is at risk of fire and needs to be shut down for protection at this time; in a case where the battery temperature is between the first preset temperature and the second preset temperature, the battery will not be unstable at this time, but needs to be cooled to meet requirements of continuous operation.

The preset protection temperature, the first preset temperature and the second preset temperature are not unique and will be different according to different battery models. For example, in a more detailed embodiment, the preset protection temperature can be set to be lower than or equal to 70°C, the first preset temperature and the second preset temperature are set to be lower than the preset protection temperature, and the first preset temperature is further lower than the second preset temperature, which is not specifically limited.

Therefore, in the solution of this embodiment, when the refrigerator is in the battery-powered refrigeration mode, after acquiring the battery temperature, the controller will compare the battery temperature with the first preset temperature and the second preset temperature, and if the battery temperature is between the first preset temperature and the second preset temperature, the compressor of the refrigerator will be controlled to operate at a lower tap position, so as to reduce the discharge amount and heat amount of the battery and alleviate the phenomenon that the battery temperature rises.

In step 106, in a case where the battery temperature is lower than or equal to the first preset temperature, the compressor is controlled to operate at the current tap position.

Specifically, when the controller compares the battery temperature with the first preset temperature and the second preset temperature, the battery temperature will be lower than or equal to the first preset temperature, and the low battery temperature will not cause battery instability and can meet the requirements of continuous refrigeration operation. Therefore, when the controller detects that the battery temperature is lower than or equal to the first preset temperature, there is no need to adjust the operation of the compressor, and it is only necessary to keep the compressor operating at the current tap position.

According to the operation control method of the refrigerator, in the case where the refrigerator is in the battery-powered refrigeration mode, the battery temperature of the refrigerator battery can be acquired in real time and is compared with the first preset temperature and the second preset temperature which are lower than the preset protection temperature. When the battery temperature is between the first preset temperature and the second preset temperature, the compressor of the refrigerator is controlled to operate at a lower tap position, and when the battery temperature is lower than or equal to the first preset temperature, the tap position of the compressor is kept unchanged. Through this solution, when the battery temperature is too high, that is, the battery temperature is between the first preset temperature and the second preset temperature, the operation tap position of the compressor can be lowered, so as to reduce the discharge amount of the battery, and further reduce the heat amount of the battery. In this way, in the process of starting the refrigerator, the operating temperature of the battery is lowered as much as possible to improve the use safety of the battery.

In one of the embodiments, in the case where the battery temperature is greater than the first preset temperature and lower than the second preset temperature, the operation control method of the refrigerator further includes: controlling a fan of the refrigerator to operate at a higher tap position; the battery and the fan of the refrigerator are provided inside the same bin.

Specifically, in the solution of this embodiment, the battery and the fan of the refrigerator are provided inside the same bin, for example, both of them are provided inside a compressor bin, so that the airflow formed when the fan of the refrigerator operates can flow through the battery, which has a certain cooling effect on the battery. Therefore, in the solution of the embodiment of the disclosure, in order to further improve the cooling efficiency of the battery, while the battery is cooled by lowering the tap position of the compressor, the fan can be controlled to operate at a higher tap position, thereby taking more heat away from the battery.

It can be understood that in another embodiment, when the refrigerator is in the battery-powered refrigeration mode, if the battery temperature is between the first preset temperature and the second preset temperature, the battery may be cooled only by lowering the compressor tap position, and the tap position of the fan remains unchanged, which is selected according to the actual needs.

Referring to FIG. 2, in one of the embodiments, step 104 includes step 202 and step 204.

Step 202: determining the number of tap positions that the compressor of the refrigerator needs to reduce at present in a case where the battery temperature is higher than the first preset temperature and lower than the second preset temperature.

Step 204: controlling the compressor to reduce the corresponding number of tap positions to operate.

Specifically, in the solution of this embodiment, when the battery temperature is between the first preset temperature and the second preset temperature and the battery temperature is lowered by lowering the tap position of the compressor, the number of tap positions that the compressor needs to reduce is not unique and fixed, and the number of tap positions to be reduced will be different depending on different actual magnitudes of the battery temperature. Therefore, in the solution of this embodiment, the number of tap positions that the compressor needs to reduce at present is first determined based on the actually acquired battery temperature, and then the compressor is controlled to operate at a lower tap position by the determined number of tap positions.

In this way, the compressor is controlled to operate by reducing the number of tap positions needed, which can meet the requirements of rapid refrigeration of the refrigerator and effectively improve adjustment accuracy of the battery temperature.

It can be understood that the way to determine the number of tap positions that the compressor needs to reduce at present is not unique. In an embodiment, the interval range determined by the first preset temperature and the second preset temperature can be divided into different temperature intervals, and the number of tap positions that the compressor needs to reduce is also set different in different temperature intervals. Specifically, the greater the battery temperature, the greater the number of tap positions that the compressor needs to reduce at present, so as to lower the battery temperature at a faster speed.

It should be noted that the interval range determined by the first preset temperature and the second preset temperature is specifically divided into two or more temperature intervals, which is not specifically limited. In order to facilitate understanding, two temperature intervals are taken as an example for explanation in the following embodiments.

In one of the embodiments, step 202 includes: in a case where the battery temperature is higher than the first preset temperature and lower than a third preset temperature, determining that the number of tap positions that the compressor of the refrigerator needs to reduce at present is a first number of tap positions; in a case where the battery temperature is higher than or equal to a third preset temperature and lower than the second preset temperature, determining that the number of tap positions that the compressor of the refrigerator needs to reduce at present is a second number of tap positions; the second number of tap positions is greater than the first number of tap positions.

Specifically, in the solution of this embodiment, a temperature interval range is determined according to the first preset temperature and the third preset temperature, and a temperature interval range is determined according to the third preset temperature and the second preset temperature. When the battery temperature is relatively low between the first preset temperature and the third preset temperature, the compressor only needs to reduce the first number of tap positions to meet battery cooling requirements; however, when the battery temperature is relatively high between the third preset temperature and the second preset temperature, the compressor needs to reduce a greater second number of tap positions to meet the battery cooling requirements.

It should be noted that the first number of tap positions and the second number of tap positions are not unique as long as the first number of tap positions is less than the second number of tap positions. For example, in a more detailed embodiment, the first number of tap positions can be set as a first tap position and the second number of tap positions can be set as a second tap position.

In the above solution, the temperature interval determined by the first preset temperature and the second preset temperature is further divided into two stages, and the compressor is controlled to lower different tap positions at different stages, which can effectively improve accuracy of adjustment of the battery temperature.

It should be noted that in another embodiment, when the battery temperature is between the first preset temperature and the second preset temperature, the temperature interval determined by the first preset temperature and the second preset temperature can be further divided into a plurality of temperature intervals in a way similar to the compressor tap position lowering control, and the higher the temperature values of the temperature interval, the more the number of tap positions the fan increases, so as to realize cooling control of the battery more quickly, which is not repeated here.

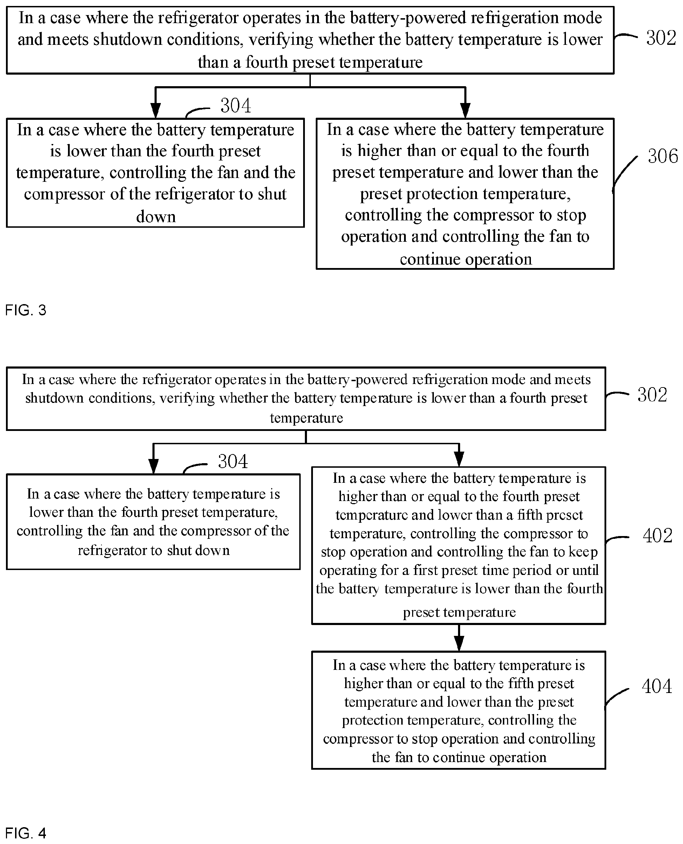

Referring to FIG. 3, in an embodiment, the operation control method of a refrigerator further includes steps 302, 304 and 306.

Step 302: in a case where the refrigerator operates in the battery-powered refrigeration mode and meets shutdown conditions, verifying whether the battery temperature is lower than a fourth preset temperature.

Step 304: in a case where the battery temperature is lower than the fourth preset temperature, controlling the fan and the compressor of the refrigerator to shut down.

Step 306: in a case where the battery temperature is higher than or equal to the fourth preset temperature and lower than the preset protection temperature, controlling the compressor to stop operation and controlling the fan to continue operation.

Specifically, in the solution of this embodiment, the shutdown conditions are conditions under which the refrigerator temporarily stops refrigeration. When the refrigerator operates in the battery-powered refrigeration mode, not only the compressor and the fan are adjusted depending upon the battery temperature during operation, but whether the shutdown conditions are met is also monitored in real time. After the refrigerator meets the shutdown conditions, the controller will compare the battery temperature with the fourth preset temperature. If the battery temperature is lower than the fourth preset temperature, it means that the current battery temperature is low, and there is no need to perform additional cooling on the battery. In this case, it is only necessary to directly control the compressor and the fan of the refrigerator to shut down to cause the refrigerator to temporarily stop refrigeration.

When the battery temperature is between the fourth preset temperature and the preset protection temperature, it means that the current battery temperature is too high. In order to ensure that the battery temperature is kept at a low level to further improve battery operation safety when operation is started next time, the controller controls the compressor to stop operation, and meanwhile controls the fan to operate, so that the air on the battery surface flows by operation of the fan, thereby lowering the battery temperature.

It should be noted that the way to determine whether the refrigerator meets the shutdown conditions is not unique, and can be determining whether the refrigerator reaches a shutdown temperature in an embodiment. Specifically, the refrigerator has a set temperature. In an actual scene, it is necessary to keep the refrigerator at the set temperature (for example, 5°C) by refrigeration, so a startup temperature and a shutdown temperature can be determined by the set temperature, where the startup temperature is slightly higher than the set temperature (for example, 6°C) and the shutdown temperature is slightly lower than the set temperature (for example, 4°C). When the refrigerator continues refrigeration and the temperature inside the refrigerator is lower than or equal to the shutdown temperature, it is considered that the shutdown conditions are met, and refrigeration is stopped.

In another embodiment, it is determined whether the refrigerator receives shutdown instructions, and when the refrigerator receives the shutdown instructions, it is considered that the refrigerator meets the shutdown conditions.

Referring to FIG. 4, in an embodiment, step 306 includes step 402 and step 404.

Step 402: in a case where the battery temperature is higher than or equal to the fourth preset temperature and lower than a fifth preset temperature, controlling the compressor to stop operation and controlling the fan to keep operating for a first preset time period or until the battery temperature is lower than the fourth preset temperature.

Step 404: in a case where the battery temperature is higher than or equal to the fifth preset temperature and lower than the preset protection temperature, controlling the compressor to stop operation and controlling the fan to continue operation.

Specifically, in the solution of this embodiment, the temperature interval determined by the fourth preset temperature and the preset protection temperature is further divided into two temperature intervals. When the battery temperature is in a smaller temperature interval, that is, between the fourth preset temperature and the fifth preset temperature, the battery temperature is relatively low, and it is only necessary to keep the fan operating for a period of time to cool the battery. However, when the battery is in a large temperature interval, that is, between the fifth preset temperature and the preset protection temperature, it is necessary to control the fan to continue operation, so as to lower the battery temperature as much as possible.

Specifically, when the battery temperature is between the fourth preset temperature and the fifth preset temperature, the fan is controlled to operate for a period of time, such as for the fixed first preset time period or until the battery temperature is lowered to lower than the fourth preset temperature, which can be selected according to the actual demand.

It should be noted that in an embodiment, the fan of the refrigerator automatically starts operation when the refrigerator is turned on, in the subsequent process, the fan continues operation until the refrigerator is powered off, and then the fan stops operation. In another embodiment, the fan automatically starts operation when the refrigerator is turned on, and then stops operation if a temperature of the refrigeration-related device of the refrigerator is detected to be lower than a certain threshold; and when the temperature of the refrigeration-related device is detected to be higher than a certain threshold, the fan starts operation again.

Through the above solution, the temperature interval for controlling operation of the fan is divided into two, and the fan is controlled to operate in different modes in different temperature intervals, so that the battery temperature is lowered as much as possible through operation of the fan, improving the use safety of the battery.

In one of the embodiments, the operation control method of a refrigerator further includes: in a case where the refrigerator has battery-powered operation requirements, verifying whether the battery temperature is lower than the preset protection temperature; in a case where the battery temperature is lower than the preset protection temperature, controlling the refrigerator to start operation; in a case where the battery temperature is higher than or equal to the preset protection temperature, controlling the refrigerator to stop operation, at which time the battery is in a protected state.

Specifically, the refrigerator has battery-powered operation requirements, that is, the refrigerator has battery-powered requirements to perform refrigeration operation. Specifically, it is considered that the refrigerator has battery-powered operation requirements when the refrigerator receives power-on instructions. In this case, the controller will self-detect the battery temperature. In a case where the self-detected battery temperature is lower than the preset protection temperature, the controller allows the refrigerator to start up, or otherwise controls the battery to enter a protected state and does not allow the refrigerator to start up, that is, controls the refrigerator to stop operation and interrupts the startup operation of the refrigerator.

Through the above solution, when the refrigerator needs to be powered by a battery, the battery temperature is detected first, and then the refrigerator is controlled to start up according to the detected result, which can effectively ensure that the refrigerator starts up in the case where the battery temperature is lower than the preset protection temperature, and improve startup safety of the battery.

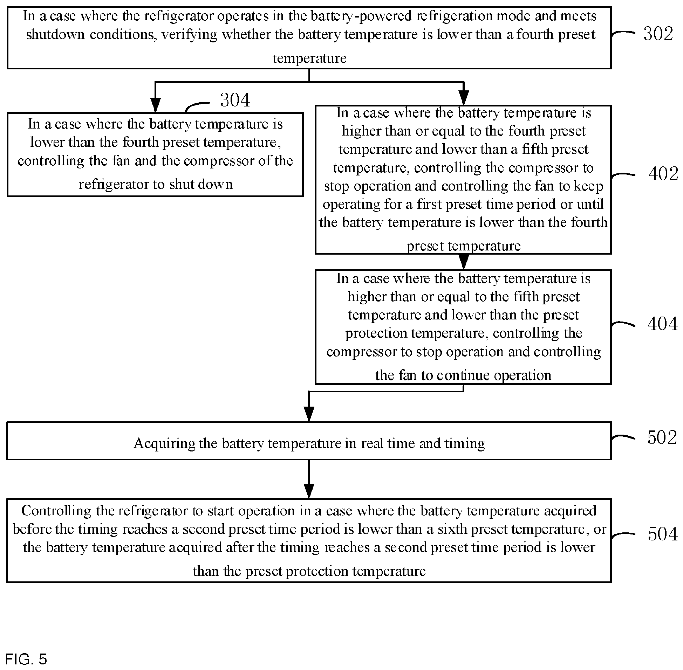

Further, referring to FIG. 5, in an embodiment, after step 404, the method further includes steps 502 and 504.

Step 502: acquiring the battery temperature in real time and timing.

Step 504: controlling the refrigerator to start operation in a case where the battery temperature acquired before the timing reaches a second preset time period is lower than a sixth preset temperature, or the battery temperature acquired after the timing reaches a second preset time period is lower than the preset protection temperature.

Specifically, the sixth preset temperature is lower than the preset protection temperature. In the solution of this embodiment, after the battery is controlled to enter the protected state, it is not that the refrigerator will not start operation at all, but will wait for the battery to cool naturally for the second preset time period. After the battery enters the protected state, the controller performs waiting for a second preset time period, and acquires the battery temperature in real time for analysis during the waiting process. If the battery temperature has decreased to lower than the sixth preset temperature before the timing reaches the second preset time period, the battery is controlled to exit the protected state and supplies power to other devices in the refrigerator through the battery, so as to control the refrigerator to start operation. Or if it is detected that the battery temperature has been lower than the preset protection temperature after the second preset time period, the battery is controlled to exit the protected state and supplies power to other devices in the refrigerator through the battery, so as to control the refrigerator to start operation.

According to the solution, the battery temperature is detected to be higher than the preset protection temperature at the startup stage of the refrigerator, and the battery enters the protected state, then the controller waits for a period of time, and acquires the battery temperature in real time during the waiting process, so as to analyze whether the battery temperature has decreased, and controls the battery to exit the protected state and controls the refrigerator to start operation when the battery temperature decreases to certain conditions, which can effectively improve a success rate of startup of the refrigerator.

For ease of understanding of the technical solution of the disclosure, the disclosure will be described below in conjunction with a detailed embodiment.

First, in the case where the refrigerator has battery-powered operation requirements, the controller will acquire the battery temperature and compare the battery temperature with the preset protection temperature, and if the battery temperature is lower than the preset protection temperature, the refrigerator is controlled to start operation (refrigeration related devices such as a compressor and a fan); if the battery temperature is higher than or equal to the preset protection temperature, the battery is controlled to enter the protected state, and the battery temperature is continuously monitored. In the case where the battery temperature is monitored to decrease to lower than the sixth preset temperature when the timing does not reach the second preset time period, or the battery temperature is monitored to be lower than the preset protection temperature when the timing reaches the second preset time period, the refrigerator is controlled to start operation.

The acquired battery temperature is compared with the first preset temperature, the second preset temperature and the third preset temperature in real time in the case where the refrigerator is in the battery-powered refrigeration mode. In the case where the battery temperature is lower than or equal to the first preset temperature, the compressor and the fan are controlled to operate at the current tap position; in the case where the battery temperature is higher than the first preset temperature and lower than the third preset temperature, the compressor of the refrigerator is controlled to operate by reducing one tap position, and the fan is controlled to operate at the current tap position or by increasing one tap position; in the case where the battery temperature is higher than or equal to the third preset temperature and lower than the second preset temperature, the compressor of the refrigerator is controlled to operate by reducing two tap positions, and the fan is controlled to operate at the current tap position or by increasing two tap positions.

Finally, whether the battery temperature is lower than the fourth preset temperature is determined in the case where the refrigerator is detected to operate in the battery-powered refrigeration mode and meet the shutdown conditions. In the case where the battery temperature is lower than the fourth preset temperature, the fan and compressor of the refrigerator are controlled to shut down; in the case where the battery temperature is higher than or equal to the fourth preset temperature and lower than the fifth preset temperature, the compressor is controlled to stop operation, and the fan is controlled to keep operating for a first preset time period, or to keep operating until the battery temperature is lower than the fourth preset temperature; in the case where the battery temperature is higher than or equal to the fifth preset temperature and lower than the preset protection temperature, the compressor is controlled to stop operation, and the fan is controlled to continue operation.

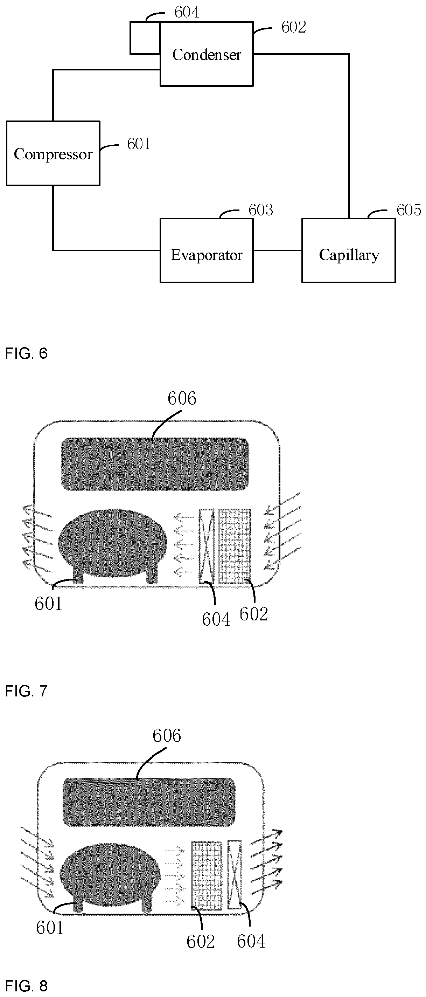

Referring to FIG. 6, a refrigerator includes a compressor 601, an evaporator 603, a capillary 605, a condenser 602, a fan 604, a battery (not shown in the drawings) and a controller (not shown in the drawings). The compressor 601 is connected with the evaporator 603 and the condenser 602, the condenser 602 is connected with the capillary 605, and the capillary 605 is connected with the evaporator 603. The fan 604 is provided on the condenser 602. The compressor 601, the evaporator 603, the condenser 602, the fan 604 and the controller are separately connected with the battery, and the compressor 601, the evaporator 603, the condenser 602 and the fan 604 are separately connected with the controller. The controller is configured to perform the steps of the operation control method of the refrigerator.

Specifically, the operation control method of the refrigerator is as shown in the above embodiments and the drawings, and will not be repeated here. The location of the fan 604 is not unique, and the fan 604 may be provided on a side surface or a top surface of the condenser 602. In detail, in an embodiment, the fan 604 may be provided on a side surface of the condenser 602 close to the compressor 601. In the case where the refrigerator is in the battery-powered refrigeration mode, the battery temperature of the refrigerator battery can be acquired in real time and is compared with the first preset temperature and the second preset temperature which are lower than the preset protection temperature. When the battery temperature is between the first preset temperature and the second preset temperature, the compressor 601 of the refrigerator is controlled to operate at a lower tap position, and when the battery temperature is lower than or equal to the first preset temperature, the tap position of the compressor 601 is kept unchanged. Through this solution, when the battery temperature is too high, that is, when the battery temperature is between the first preset temperature and the second preset temperature, the operation tap position of the compressor 601 can be lowered, so as to reduce the discharge amount of the battery, and further reduce the heat amount of the battery. In this way, in the process of starting the refrigerator, the operating temperature of the battery is lowered as much as possible to improve the use safety of the battery.

In an embodiment, the refrigerator is provided with a compressor bin, and the battery, the compressor 601, the condenser 602 and the fan 604 are provided inside the compressor bin.

Specifically, in the solution of this embodiment, the battery and the compressor 601 of the refrigerator are provided in a bin together, and the battery temperature will also be affected by a temperature of the compressor 601, that is, a bin temperature will rise with the rise of a temperature of the compressor 601, and thus the battery temperature will rise. In this way, by lowering the tap position of the compressor 601 to operate, the heat amount of the battery can be reduced, and meanwhile the heat amount of the compressor 601 can also be effectively reduced, thereby reducing the bin temperature, and finally alleviating the phenomenon of battery heating to a certain extent.

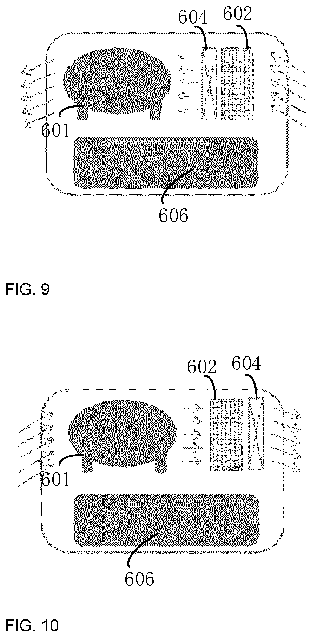

It should be noted that the arrangement of the battery, the compressor 601, the condenser 602 and the fan 604 inside the same bin is not unique. In an embodiment, the compressor 601, the condenser 602 and the fan 604 can be taken as an integral component, and the battery is provided at any position around the integral component formed by the compressor 601, the condenser 602 and the fan 604, as long as the airflow generated during operation of the fan 604 can flow through the battery. For example, a battery 606 is provided above (with reference to FIGS. 7 and 8) or below the integral component formed by the compressor 601, the condenser 602 and the fan 604, or on a side surface of the integral component formed by the compressor 601, the condenser 602 and the fan 604 (with reference to FIGS. 9 and 10).

Further, in an embodiment, as shown in FIG. 7 or FIG. 9, the compressor 601, the fan 604 and the condenser 602 can be arranged in parallel, the fan 604 is located between the condenser 602 and the compressor 601, the condenser 602 is provided at an air inlet of the fan 604, and the compressor 601 is provided at an air outlet of the fan 604, so that the airflow output by the fan 604 passes through the battery 606 and the compressor 601 to cool the battery 606 and the compressor 601.

In detail, considering an air path of the whole component formed by the compressor 601, the condenser 602 and the fan 604, a temperature of the passing air has a certain influence on the cooling of the battery 606. The lower the temperature of the air passing through the battery 606, the more heat of the battery 606 can be taken away, and the better the cooling effect on the battery 606. Therefore, in another embodiment, in order to improve the cooling efficiency of the battery 606 and the compressor 601, the compressor 601, the fan 604 and the condenser 602 can be provided in parallel, the condenser 602 is provided between the compressor 601 and the fan 604, and the condenser 602 is provided at the air inlet of the fan 604, referring to FIG. 8 or FIG. 10 for details. In this way, the cold air can pass through the compressor 601 and the battery 606 first, cool the compressor 601 and the battery 606 by the flow of the cold air, which has higher cooling efficiency.

The embodiments described above represent only several embodiments of the present disclosure, which are described in detail but should not be construed as limitations of the scope of the disclosure. Accordingly, the scope of the present disclosure should be subject to the appended claims.

## Claims

1. An operation control method of a refrigerator, comprising:
- acquiring a battery temperature of the refrigerator in real time in a case where the refrigerator is in a battery-powered refrigeration mode;
- in a case where the battery temperature is greater than a first preset temperature and lower than a second preset temperature, controlling a compressor (601) of the refrigerator to operate at a lower tap position, wherein the first preset temperature and the second preset temperature are both lower than a preset protection temperature; and
- in a case where the battery temperature is lower than or equal to the first preset temperature, controlling the compressor (601) to operate at a current tap position.

2. The operation control method of claim 1, in the case where the battery temperature is greater than the first preset temperature and lower than the second preset temperature, further comprising:
- controlling a fan (604) of the refrigerator to operate at a higher tap position, wherein a battery (606) and the fan (604) of the refrigerator are provided inside a same bin.

3. The operation control method of claim 1 or 2, wherein in the case where the battery temperature is greater than the first preset temperature and lower than the second preset temperature, said controlling a compressor (601) of the refrigerator to operate at a lower tap position comprises:
- in a case where the battery temperature is higher than the first preset temperature and lower than the second preset temperature, determining a number of tap positions that the compressor (601) of the refrigerator needs to reduce at present; and
- controlling the compressor (601) to reduce the corresponding number of tap positions to operate.

4. The operation control method of claim 3, wherein in the case where the battery temperature is greater than the first preset temperature and lower than the second preset temperature, said determining the number of tap positions that the compressor (601) of the refrigerator needs to reduce at present comprises:
- in a case where the battery temperature is higher than the first preset temperature and lower than a third preset temperature, determining that the number of tap positions that the compressor (601) of the refrigerator needs to reduce at present is a first number of tap positions.

5. The operation control method of claim 3 or 4, wherein in the case where the battery temperature is greater than the first preset temperature and lower than the second preset temperature, said determining the number of tap positions that the compressor (601) of the refrigerator needs to reduce at present comprises:
- in a case where the battery temperature is higher than or equal to the third preset temperature and lower than the second preset temperature, determining that the number of tap positions that the compressor (601) of the refrigerator needs to reduce at present is a second number of tap positions; the second number of tap positions is greater than the first number of tap positions.

6. The operation control method of any one of the preceding claims, further comprising:
- in a case where the refrigerator operates in the battery-powered refrigeration mode and meets shutdown conditions, verifying whether the battery temperature is lower than a fourth preset temperature;
- in a case where the battery temperature is lower than the fourth preset temperature, controlling the fan (604) and the compressor (601) to shut down; and
- in a case where the battery temperature is higher than or equal to the fourth preset temperature and lower than the preset protection temperature, controlling the compressor (601) to stop operation and controlling the fan (604) to continue operation.

7. The operation control method of claim 6, wherein in a case where the battery temperature is higher than or equal to the fourth preset temperature and lower than the preset protection temperature, said controlling the compressor (601) to stop operation and controlling the fan (604) to continue operation comprises:
- in a case where the battery temperature is higher than or equal to the fourth preset temperature and lower than a fifth preset temperature, controlling the compressor (601) to stop operation and controlling the fan (604) to keep operating for a first preset time period or until the battery temperature is lower than the fourth preset temperature.

8. The operation control method of claim 6 or 7, wherein in a case where the battery temperature is higher than or equal to the fourth preset temperature and lower than the preset protection temperature, said controlling the compressor (601) to stop operation and controlling the fan (604) to continue operation comprises:
- in a case where the battery temperature is higher than or equal to the fifth preset temperature and lower than the preset protection temperature, controlling the compressor (601) to stop operation and controlling the fan (604) to continue operation.

9. The operation control method of any one of the preceding claims, further comprising:
- in a case where the refrigerator has battery-powered operation requirements, verifying whether the battery temperature is lower than the preset protection temperature.

10. The operation control method of claim 9, further comprising:
- in a case where the battery temperature is lower than the preset protection temperature, controlling the refrigerator to start operation.

11. The operation control method of claim 9 or 10, further comprising:
- in a case where the battery temperature is higher than or equal to the preset protection temperature, controlling the refrigerator to stop operation.

12. The operation control method of claim 11, wherein after controlling the refrigerator to stop operation in a case where the battery temperature is higher than or equal to the preset protection temperature, further comprising:
- acquiring the battery temperature in real time and timing; and
- controlling the refrigerator to start operation in a case where the battery temperature acquired before the timing reaches the second preset time period is lower than a sixth preset temperature, or the battery temperature acquired after the timing reaches the second preset time period is lower than the preset protection temperature, wherein the sixth preset temperature is lower than the preset protection temperature.

13. A refrigerator comprising a compressor (601), an evaporator (603), a capillary (605), a condenser (602), a fan (604), a battery (606) and a controller, wherein:
- the compressor (601) is connected with the evaporator (603) and the condenser (602), the condenser (602) is connected with the capillary (605), and the capillary (605) is connected with the evaporator (603);
- the fan (604) is provided on the condenser (602);
- the compressor (601), the evaporator (603), the condenser (602), the fan (604) and the controller are separately connected with the battery (606), and the compressor (601), the evaporator (603), the condenser (602) and the fan (604) are separately connected with the controller; **characterized in that**
- the controller is configured to perform the steps of the operation control method of the refrigerator of any one of the preceding claims.

14. The refrigerator of claim 13, wherein the refrigerator is provided with a compressor bin, and the battery (606), the compressor (601), the condenser (602), and the fan (604) are provided inside the compressor bin.

15. The refrigerator of claim 13 or 14, wherein the fan (604) and the condenser (602) are arranged in parallel, the fan (604) is located between the condenser (602) and the compressor (601), the condenser (602) is provided at an air inlet of the fan (604), and the compressor (601) is provided at an air outlet of the fan (604).

## Patentansprüche

1. Betriebssteuerungsverfahren eines Kühlschranks, umfassend:
- Erfassen einer Batterietemperatur des Kühlschranks in Echtzeit in einem Fall, in dem sich der Kühlschrank in einem batteriebetriebenen Kühlmodus befindet;
- in einem Fall, in dem die Batterietemperatur höher als eine erste voreingestellte Temperatur und niedriger als eine zweite voreingestellte Temperatur ist, Steuern eines Kompressors (601) des Kühlschranks, auf einer niedrigeren Stufenposition zu arbeiten, wobei die erste voreingestellte Temperatur und die zweite voreingestellte Temperatur beide niedriger als eine voreingestellte Schutztemperatur sind; und
- in einem Fall, in dem die Batterietemperatur niedriger als oder gleich der ersten voreingestellten Temperatur ist, Steuern des Kompressors (601), an einer aktuellen Stufenposition zu arbeiten.

2. Betriebssteuerungsverfahren nach Anspruch 1, ferner umfassend in dem Fall, in dem die Batterietemperatur höher als die erste voreingestellte Temperatur und niedriger als die zweite voreingestellte Temperatur ist:
- Steuern eines Gebläses (604) des Kühlschranks, an einer höheren Stufenposition zu arbeiten, wobei eine Batterie (606) und das Gebläse (604) des Kühlschranks innerhalb eines selben Behältnisses bereitgestellt sind.

3. Betriebssteuerungsverfahren nach Anspruch 1 oder 2, wobei in dem Fall, in dem die Batterietemperatur höher als die erste voreingestellte Temperatur und niedriger als die zweite voreingestellte Temperatur ist, das Steuern eines Kompressors (601) des Kühlschranks, an einer niedrigeren Stufenposition zu arbeiten, Folgendes umfasst:
- in einem Fall, in dem die Batterietemperatur höher als die erste voreingestellte Temperatur und niedriger als die zweite voreingestellte Temperatur ist, Bestimmen einer Anzahl von Stufenpositionen, um die der Kompressor (601) des Kühlschranks gegenwärtig reduziert werden muss; und
- Steuern des Kompressors (601), die entsprechende Anzahl von Stufenpositionen zu reduzieren, um zu arbeiten.

4. Betriebssteuerungsverfahren nach Anspruch 3, wobei in dem Fall, in dem die Batterietemperatur höher als die erste voreingestellte Temperatur und niedriger als die zweite voreingestellte Temperatur ist, das Bestimmen der Anzahl von Stufenpositionen, um die der Kompressor (601) des Kühlschranks gegenwärtig reduziert werden muss, Folgendes umfasst:
- in einem Fall, in dem die Batterietemperatur höher als die erste voreingestellte Temperatur und niedriger als eine dritte voreingestellte Temperatur ist, Bestimmen, dass die Anzahl von Stufenpositionen, um die der Kompressor (601) des Kühlschranks gegenwärtig reduziert werden muss, eine erste Anzahl von Stufenpositionen ist.

5. Betriebssteuerungsverfahren nach Anspruch 3 oder 4, wobei in dem Fall, in dem die Batterietemperatur höher als die erste voreingestellte Temperatur und niedriger als die zweite voreingestellte Temperatur ist, das Bestimmen der Anzahl von Stufenpositionen, um die der Kompressor (601) des Kühlschranks gegenwärtig reduziert werden muss, Folgendes umfasst:
- in einem Fall, in dem die Batterietemperatur höher als oder gleich der dritten voreingestellten Temperatur und niedriger als die zweite voreingestellte Temperatur ist, Bestimmen, dass die Anzahl von Stufenpositionen, um die der Kompressor (601) des Kühlschranks gegenwärtig reduziert werden muss, eine zweite Anzahl von Stufenpositionen ist; wobei die zweite Anzahl von Stufenpositionen größer als die erste Anzahl von Stufenpositionen ist.

6. Betriebssteuerungsverfahren nach einem der vorhergehenden Ansprüche, ferner umfassend:
- in einem Fall, in dem der Kühlschrank in dem batteriebetriebenen Kühlmodus arbeitet und Abschaltbedingungen erfüllt, Verifizieren, ob die Batterietemperatur niedriger als eine vierte voreingestellte Temperatur ist;
- in einem Fall, in dem die Batterietemperatur niedriger als die vierte voreingestellte Temperatur ist, Steuern des Gebläses (604) und des Kompressors (601), abzuschalten; und
- in einem Fall, in dem die Batterietemperatur höher als oder gleich der vierten voreingestellten Temperatur und niedriger als die voreingestellte Schutztemperatur ist, Steuern des Kompressors (601), den Betrieb zu stoppen, und Steuern des Gebläses (604), den Betrieb fortzusetzen.

7. Betriebssteuerungsverfahren nach Anspruch 6, wobei in einem Fall, in dem die Batterietemperatur höher als oder gleich der vierten voreingestellten Temperatur und niedriger als die voreingestellte Schutztemperatur ist, das Steuern des Kompressors (601), den Betrieb zu stoppen, und Steuern des Gebläses (604), den Betrieb fortzusetzen, Folgendes umfasst:
- in einem Fall, in dem die Batterietemperatur höher als oder gleich der vierten voreingestellten Temperatur und niedriger als eine fünfte voreingestellte Temperatur ist, Steuern des Kompressors (601), den Betrieb zu stoppen, und Steuern des Gebläses (604), den Betrieb für eine erste voreingestellte Zeitdauer oder bis die Batterietemperatur niedriger als die vierte voreingestellte Temperatur ist, fortzusetzen.

8. Betriebssteuerungsverfahren nach Anspruch 6 oder 7, wobei in einem Fall, in dem die Batterietemperatur höher als oder gleich der vierten voreingestellten Temperatur und niedriger als die voreingestellte Schutztemperatur ist, das Steuern des Kompressors (601), den Betrieb zu stoppen, und Steuern des Gebläses (604), den Betrieb fortzusetzen, Folgendes umfasst:
- in einem Fall, in dem die Batterietemperatur höher als oder gleich der fünften voreingestellten Temperatur und niedriger als die voreingestellte Schutztemperatur ist, Steuern des Kompressors (601), den Betrieb zu stoppen, und Steuern des Gebläses (604), den Betrieb fortzusetzen.

9. Betriebssteuerungsverfahren nach einem der vorhergehenden Ansprüche, ferner umfassend:
- in einem Fall, in dem der Kühlschrank Anforderungen an einen batteriebetriebenen Betrieb aufweist, Verifizieren, ob die Batterietemperatur niedriger als die voreingestellte Schutztemperatur ist.

10. Betriebssteuerungsverfahren nach Anspruch 9, ferner umfassend:
- in einem Fall, in dem die Batterietemperatur niedriger als die voreingestellte Schutztemperatur ist, Steuern des Kühlschranks, den Betrieb zu starten.

11. Betriebssteuerungsverfahren nach Anspruch 9 oder 10, ferner umfassend:
- in einem Fall, in dem die Batterietemperatur höher als oder gleich der voreingestellten Schutztemperatur ist, Steuern des Kühlschranks, den Betrieb zu stoppen.

12. Betriebssteuerungsverfahren nach Anspruch 11, wobei das Verfahren nach dem Steuern des Kühlschranks zum Stoppen des Betriebs in einem Fall, in dem die Batterietemperatur höher als oder gleich der voreingestellten Schutztemperatur ist, ferner Folgendes umfasst:
- Erfassen der Batterietemperatur in Echtzeit und Durchführen einer Zeitmessung; und
- Steuern des Kühlschranks, den Betrieb zu starten, in einem Fall, in dem die Batterietemperatur, die erfasst wird, bevor die Zeitmessung die zweite voreingestellte Zeitdauer erreicht, niedriger als eine sechste voreingestellte Temperatur ist, oder die Batterietemperatur, die erfasst wird, nachdem die Zeitmessung die zweite voreingestellte Zeitdauer erreicht hat, niedriger als die voreingestellte Schutztemperatur ist, wobei die sechste voreingestellte Temperatur niedriger als die voreingestellte Schutztemperatur ist.

13. Kühlschrank, umfassend einen Kompressor (601), einen Verdampfer (603), eine Kapillare (605), einen Kondensator (602), ein Gebläse (604), eine Batterie (606) und eine Steuerung, wobei:
- der Kompressor (601) mit dem Verdampfer (603) und dem Kondensator (602) verbunden ist, der Kondensator (602) mit der Kapillare (605) verbunden ist und die Kapillare (605) mit dem Verdampfer (603) verbunden ist;
- das Gebläse (604) an dem Kondensator (602) angeordnet ist;
- der Kompressor (601), der Verdampfer (603), der Kondensator (602), das Gebläse (604) und die Steuerung separat mit der Batterie (606) verbunden sind und der Kompressor (601), der Verdampfer (603), der Kondensator (602) und das Gebläse (604) separat mit der Steuerung verbunden sind; **dadurch gekennzeichnet, dass**
- die Steuerung eingerichtet ist, die Schritte des Betriebssteuerungsverfahrens des Kühlschranks nach einem der vorhergehenden Ansprüche durchzuführen.

14. Kühlschrank nach Anspruch 13, wobei der Kühlschrank mit einem Kompressorbehältnis bereitgestellt ist und die Batterie (606), der Kompressor (601), der Kondensator (602) und das Gebläse (604) innerhalb des Kompressorbehältnisses angeordnet sind.

15. Kühlschrank nach Anspruch 13 oder 14, wobei das Gebläse (604) und der Kondensator (602) parallel angeordnet sind, das Gebläse (604) zwischen dem Kondensator (602) und dem Kompressor (601) angeordnet ist, der Kondensator (602) an einem Lufteinlass des Gebläses (604) angeordnet ist und der Kompressor (601) an einem Luftauslass des Gebläses (604) angeordnet ist.

## Revendications

1. Procédé de commande de fonctionnement d'un réfrigérateur, comprenant :
- l'acquisition d'une température de batterie du réfrigérateur en temps réel dans un cas où le réfrigérateur se trouve dans un mode de réfrigération sur batterie ;
- dans un cas où la température de batterie est supérieure à une première température prédéfinie et inférieure à une deuxième température prédéfinie, la commande à un compresseur (601) du réfrigérateur de fonctionner à une position de prise inférieure, dans lequel la première température prédéfinie et la deuxième température prédéfinie sont toutes les deux inférieures à une température de protection prédéfinie ; et
- dans un cas où la température de batterie est inférieure ou égale à la première température prédéfinie, la commande au compresseur (601) de fonctionner à une position de prise actuelle.

2. Procédé de commande de fonctionnement selon la revendication 1, dans le cas où la température de batterie est supérieure à la première température prédéfinie et inférieure à la deuxième température prédéfinie, comprenant en outre :
- la commande à un ventilateur (604) du réfrigérateur de fonctionner à une position de prise supérieure, dans lequel une batterie (606) et le ventilateur (604) du réfrigérateur sont prévus à l'intérieur d'un même compartiment.

3. Procédé de commande de fonctionnement selon la revendication 1 ou 2, dans lequel, dans le cas où la température de batterie est supérieure à la première température prédéfinie et inférieure à la deuxième température prédéfinie, ladite commande à un compresseur (601) du réfrigérateur de fonctionner à une position de prise inférieure comprend :
- dans un cas où la température de batterie est supérieure à la première température prédéfinie et inférieure à la deuxième température prédéfinie, la détermination d'un nombre de positions de prise que le compresseur (601) du réfrigérateur doit réduire actuellement ; et
- la commande au compresseur (601) de réduire le nombre correspondant de positions de prise pour fonctionner.

4. Procédé de commande de fonctionnement selon la revendication 3, dans lequel, dans le cas où la température de batterie est supérieure à la première température prédéfinie et inférieure à la deuxième température prédéfinie, ladite détermination du nombre de positions de prise que le compresseur (601) du réfrigérateur doit réduire actuellement comprend :
- dans un cas où la température de batterie est supérieure à la première température prédéfinie et inférieure à une troisième température prédéfinie, la détermination que le nombre de positions de prise que le compresseur (601) du réfrigérateur doit réduire actuellement est un premier nombre de positions de prise.

5. Procédé de commande de fonctionnement selon la revendication 3 ou 4, dans lequel, dans le cas où la température de batterie est supérieure à la première température prédéfinie et inférieure à la deuxième température prédéfinie, ladite détermination du nombre de positions de prise que le compresseur (601) du réfrigérateur doit réduire actuellement comprend :
- dans un cas où la température de batterie est supérieure ou égale à la troisième température prédéfinie et inférieure à la deuxième température prédéfinie, la détermination que le nombre de positions de prise que le compresseur (601) du réfrigérateur doit réduire actuellement est un deuxième nombre de positions de prise ; le deuxième nombre de positions de prise est supérieur au premier nombre de positions de prise.

6. Procédé de commande de fonctionnement selon l'une quelconque des revendications précédentes, comprenant en outre :
- dans un cas où le réfrigérateur fonctionne dans le mode de réfrigération sur batterie et remplit des conditions d'arrêt, la vérification si la température de batterie est inférieure à une quatrième température prédéfinie ;
- dans un cas où la température de batterie est inférieure à la quatrième température prédéfinie, la commande au ventilateur (604) et au compresseur (601) de s'arrêter ; et
- dans un cas où la température de batterie est supérieure ou égale à la quatrième température prédéfinie et inférieure à la température de protection prédéfinie, la commande au compresseur (601) de cesser de fonctionner et la commande au ventilateur (604) de continuer à fonctionner.

7. Procédé de commande de fonctionnement selon la revendication 6, dans lequel, dans un cas où la température de batterie est supérieure ou égale à la quatrième température prédéfinie et inférieure à la température de protection prédéfinie, ladite commande au compresseur (601) de cesser de fonctionner et ladite commande au ventilateur (604) de continuer à fonctionner comprennent :
- dans un cas où la température de batterie est supérieure ou égale à la quatrième température prédéfinie et inférieure à une cinquième température prédéfinie, la commande au compresseur (601) de cesser de fonctionner et la commande au ventilateur (604) de continuer à fonctionner pendant une première période de temps prédéfinie ou jusqu'à ce que la température de batterie soit inférieure à la quatrième température prédéfinie.

8. Procédé de commande de fonctionnement selon la revendication 6 ou 7, dans lequel, dans un cas où la température de batterie est supérieure ou égale à la quatrième température prédéfinie et inférieure à la température de protection prédéfinie, ladite commande au compresseur (601) de cesser de fonctionner et ladite commande au ventilateur (604) de continuer à fonctionner comprennent :
- dans un cas où la température de batterie est supérieure ou égale à la cinquième température prédéfinie et inférieure à la température de protection prédéfinie, la commande au compresseur (601) de cesser de fonctionner et la commande au ventilateur (604) de continuer à fonctionner.

9. Procédé de commande de fonctionnement selon l'une quelconque des revendications précédentes, comprenant en outre :
- dans un cas où le réfrigérateur présente des exigences de fonctionnement sur batterie, la vérification si la température de batterie est inférieure à la température de protection prédéfinie.

10. Procédé de commande de fonctionnement selon la revendication 9, comprenant en outre :
- dans un cas où la température de batterie est inférieure à la température de protection prédéfinie, la commande au réfrigérateur de commencer à fonctionner.

11. Procédé de commande de fonctionnement selon la revendication 9 ou 10, comprenant en outre :
- dans un cas où la température de batterie est supérieure ou égale à la température de protection prédéfinie, la commande au réfrigérateur de cesser de fonctionner.

12. Procédé de commande de fonctionnement selon la revendication 11, dans lequel, après la commande au réfrigérateur de cesser de fonctionner dans un cas où la température de batterie est supérieure ou égale à la température de protection prédéfinie, le procédé comprend en outre :
- l'acquisition de la température de batterie en temps réel et le lancement d'un chronométrage ; et
- la commande au réfrigérateur de commencer à fonctionner dans un cas où la température de batterie acquise avant que le chronométrage n'atteigne la deuxième période de temps prédéfinie est inférieure à une sixième température prédéfinie, ou la température de batterie acquise après que le chronométrage atteint la deuxième période de temps prédéfinie est inférieure à la température de protection prédéfinie, dans lequel la sixième température prédéfinie est inférieure à la température de protection prédéfinie.

13. Réfrigérateur comprenant un compresseur (601), un évaporateur (603), un capillaire (605), un condenseur (602), un ventilateur (604), une batterie (606) et un dispositif de commande, dans lequel :
- le compresseur (601) est relié à l'évaporateur (603) et au condenseur (602), le condenseur (602) est relié au capillaire (605), et le capillaire (605) est relié à l'évaporateur (603) ;
- le ventilateur (604) est prévu sur le condenseur (602) ;
- le compresseur (601), l'évaporateur (603), le condenseur (602), le ventilateur (604) et le dispositif de commande sont reliés séparément à la batterie (606), et le compresseur (601), l'évaporateur (603), le condenseur (602) et le ventilateur (604) sont reliés séparément au dispositif de commande ; **caractérisé en ce que**
- le dispositif de commande est configuré pour réaliser les étapes du procédé de commande de fonctionnement du réfrigérateur selon l'une quelconque des revendications précédentes.

14. Réfrigérateur selon la revendication 13, dans lequel le réfrigérateur est pourvu d'un compartiment de compresseur, et la batterie (606), le compresseur (601), le condenseur (602), et le ventilateur (604) sont prévus à l'intérieur du compartiment de compresseur.

15. Réfrigérateur selon la revendication 13 ou 14, dans lequel le ventilateur (604) et le condenseur (602) sont agencés en parallèle, le ventilateur (604) est situé entre le condenseur (602) et le compresseur (601), le condenseur (602) est prévu à une entrée d'air du ventilateur (604), et le compresseur (601) est prévu à une sortie d'air du ventilateur (604).
